# EUROPEAN PATENT APPLICATION

(11) **EP 4 517 143 A1**
(43) Date of publication of application: **05.03.2025**
(21) Application number: 23815602.0
(22) Date of filing: 14.04.2023
(51) Int. Cl.: F16K 15/06, F16K 15/08, F16K 1/44, H01M 8/04, F04B 15/06

(54) **SUCTION VALVE, BOOST PUMP, AND HYDROGEN SUPPLY SYSTEM**

(30) Priority: 02.06.2022 JP 2022090215
(71) Applicant: Mitsubishi Heavy Industries, Ltd., Tokyo 100-8332 (JP)
(72) Inventor: HARADA, Motoshi, Tokyo 100-8332 (JP); KIHARA, Yuichi, Tokyo 100-8332 (JP); ASAI, Hideaki, Tokyo 100-8332 (JP); MITSUDA, Kimihiko, Tokyo 100-8332 (JP); NAKAMICHI, Kenji, Tokyo 100-8332 (JP)
(74) Representative: Cabinet Beau de Loménie
(86) International application number: PCT/JP2023/015237
(87) International publication number: WO 2023/233841

(57) **Abstract**

A suction valve, a pressure boosting pump, and a hydrogen supply system include a block having a compression chamber and a recess communicating with the compression chamber, a valve casing housed in the recess and forming a first space part communicating with the compression chamber, a pressing member pressing the valve casing against the block, a suction channel provided in the valve casing and sucking a low-temperature fluid to the first space part, a first discharge channel provided in the valve casing and discharging gas in the first space part, a first valve body capable of causing the compression chamber and the first space part to communicate with each other and capable of isolating the compression chamber and the first space part from each other, a second valve body capable of causing the first space part and the first discharge channel to communicate with each other and capable of isolating the first space part and the first discharge channel from each other, and a second discharge channel discharging gas in the first discharge channel outside the pressing member.

## Description

### Field

The present disclosure relates to a suction valve of a pressure boosting pump for boosting the pressure of low-temperature fluids such as hydrogen, a pressure boosting pump having the suction valve, and a hydrogen supply system having the pressure boosting pump.

### Background

Examples of conventional suction valves of pressure boosting pumps include one described in Patent Literature 1 below. The suction valve described in Patent Literature 1 includes a valve casing having a fluid inflow hole and a communicating hole causing a recess and the outside to communicate with each other, a first valve body that can shut off a communicating state between a compression chamber and the recess, and a second valve body that can shut off a communicating state between the recess and the fluid inflow hole while maintaining a communicating state between the recess and the communicating hole. With this suction valve, in a compression stroke of a low-temperature fluid, a compressed fluid in the compression chamber can be discharged to the outside, and the gasified low-temperature fluid remaining in the recess can be discharged to the outside from the communicating hole.

### Citation List

### Patent Literature

Patent Literature 1: Japanese Patent No. 1041807

### Summary

### Technical Problem

Conventional suction valves, when the low-temperature is compressed, can discharge the gasified low-temperature fluid remaining in the recess to the outside from the communicating hole. In this case, the gasified low-temperature fluid remaining in the recess flows downward through the communicating hole extending downward from the recess and is discharged to the outside. However, since the gasified low-temperature fluid is gas, it is less likely to flow downward and may stay around an outlet end of the communicating hole, that is, a lower end of the communicating hole. There is a problem in that if the gasified low-temperature fluid is not properly discharged, the gasified low-temperature fluid is sucked into the compression chamber again in a suction stroke of the low-temperature fluid, resulting in a reduction in the pump efficiency of a pressure boosting pump.

The present disclosure solves the problem described above, and an object thereof is to provide a suction valve, a pressure boosting pump, and a hydrogen supply system that can properly discharge a gasified fluid.

### Solution to Problem

In order to achieve the above object, a suction valve according to the present disclosure includes: a block that includes a compression chamber and a recess communicating with the compression chamber; a valve casing that is housed in the recess and forms a first space part communicating with the compression chamber; a pressing member that presses the valve casing against the block; a suction channel that is provided in the valve casing and sucks a low-temperature fluid to the first space part; a first discharge channel that is provided in the valve casing and discharges gas in the first space part; a first valve body that is capable of causing the compression chamber and the first space part to communicate with each other and is capable of isolating the compression chamber and the first space part from each other; a second valve body that is capable of causing the first space part and the first discharge channel to communicate with each other and is capable of isolating the first space part and the first discharge channel from each other; and a second discharge channel that discharges gas in the first discharge channel outside the pressing member.

Further, a pressure boosting pump according to the present disclosure includes: the above-described suction valve; a piston that compresses the low-temperature fluid sucked from the suction valve to the compression chamber; and a discharge valve that discharges the low-temperature fluid compressed by the piston.

Further, a hydrogen supply system according to the present disclosure includes: a compression device that includes the above-described pressure boosting pump to compress liquid hydrogen as the low-temperature fluid; an evaporation device that vaporizes the liquid hydrogen compressed by the compression device; and a dispenser that supplies hydrogen gas vaporized by the evaporation device.

### Advantageous Effects of Invention

The suction valve, the pressure boosting pump, and the hydrogen supply system of the present disclosure can properly discharge a gasified fluid.

### Brief Description of Drawings

FIG. 1 is a schematic diagram of an overall configuration of a hydrogen supply system of a first embodiment.
FIG. 2 is a schematic configuration diagram of a compression device.
FIG. 3 is a vertical sectional view of the main part of a pressure boosting pump including a suction valve of the first embodiment.
FIG. 4 is a IV-IV sectional view of FIG. 3 representing the suction valve.
FIG. 5 is a perspective view of a casing pressing member.
FIG. 6 is a vertical sectional view of the main part of the pressure boosting pump including the suction valve of a modification of the first embodiment.
FIG. 7 is a vertical sectional view of an operating state of the pressure boosting pump.
FIG. 8 is a vertical sectional view of the main part of a pressure boosting pump including a suction valve of a second embodiment.
FIG. 9 is a vertical sectional view of the main part of a pressure boosting pump including a suction valve of a third embodiment.
FIG. 10 is a perspective view of a casing pressing member.
FIG. 11 is a vertical sectional view of the casing pressing member.
FIG. 12 is a vertical sectional view of the main part of a pressure boosting pump including a suction valve of a fourth embodiment.
FIG. 13 is a perspective view of a casing pressing member.
FIG. 14 is a vertical sectional view of the casing pressing member.

### Description of Embodiments

The following describes a preferred embodiment of the present disclosure in detail with reference to the accompanying drawings. The present disclosure is not limited by this embodiment, and when there are a plurality of embodiments, combinations of the embodiments are also included. The components in the embodiment include ones that those skilled in the art can easily assume, substantially the same ones, and ones in what is called the range of equivalence.

### <Hydrogen Supply System>

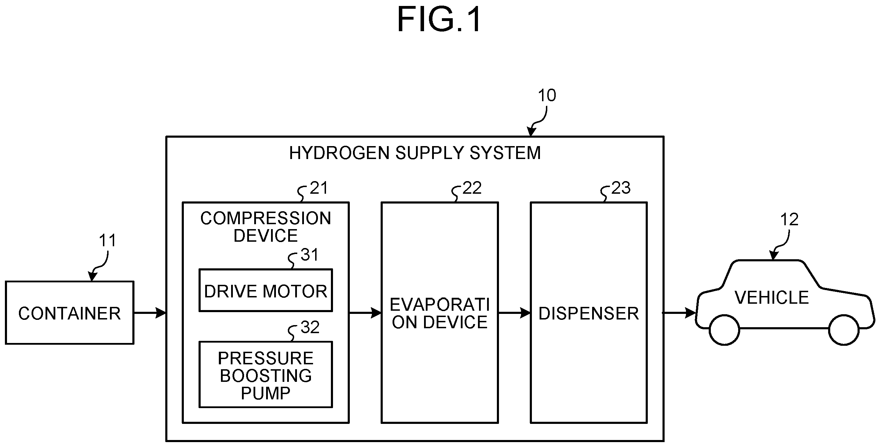

FIG. 1 is a schematic diagram of an overall configuration of a hydrogen supply system of a first embodiment.

As illustrated in FIG. 1, this hydrogen supply system 10 supplies (refills) liquid hydrogen stored in a container 11 as hydrogen gas at a certain pressure to a power source of a vehicle 12. The power source is, for example, a fuel cell, a hydrogen engine, or the like and is installed in the vehicle 12. The hydrogen supply system 10 is, for example, what is called a hydrogen station facility supplying (refilling) hydrogen gas as a fuel to the power source of the vehicle 12. However, the hydrogen supply system 10 is not limited to the one supplying hydrogen gas to the power source of the vehicle 12 but also compresses and supplies low-temperature fluids (for example, liquid hydrogen, liquid nitrogen, liquid oxygen, liquefied carbon dioxide gas, liquefied natural gas, liquefied propane gas, and the like).

The hydrogen supply system 10 has a compression device 21, an evaporation device 22, and a dispenser 23. The compression device 21 compresses liquid hydrogen (a low-temperature fluid) supplied from the container 11 to a certain high pressure (a high-pressure state) set in advance. The evaporation device 22 vaporizes the high-pressure liquid hydrogen compressed by the compression device 21 to generate hydrogen gas. The dispenser 23 fills the power source of the vehicle 12 with the hydrogen gas generated by the evaporation device 22.

The compression device 21 compresses the liquid hydrogen stored in the container 11 to a certain high pressure, but this is not limiting. For example, if the container 11 stores hydrogen gas, the compression device 21 may compress the hydrogen gas stored in the container 11 to a certain high pressure.

The compression device 21 has a drive motor 31 and a pressure boosting pump 32. The drive motor 31 is an electric motor that can be driven by externally supplied electric power. The number of revolutions of the drive motor 31 is controlled by an inverter (not shown). The drive motor 31 transmits rotational power to the pressure boosting pump 32. The pressure boosting pump 32 operates by the rotational power of the drive motor 31.

### <Compression Device>

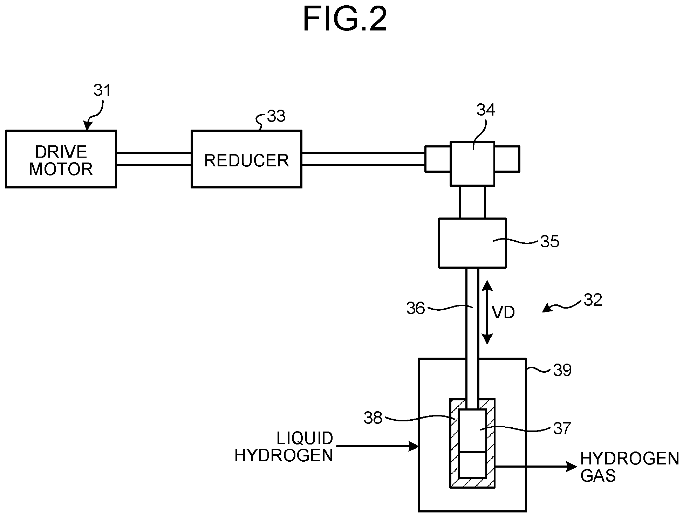

FIG. 2 is a schematic diagram of the compression device.

As illustrated in FIG. 2, the pressure boosting pump 32 is coupled to the drive motor 31 via a reducer 33. The reducer 33 reduces the rotational power of the drive motor 31 and transmits it to the pressure boosting pump 32. The pressure boosting pump 32 is a reciprocating pump. The pressure boosting pump 32 operates by converting the rotational power of the drive motor 31, which has been reduced by the reducer 33, into reciprocating power. The pressure boosting pump 32 alternately performs suction and compression (pressure boosting) of liquid hydrogen by reciprocating power to compress the sucked liquid hydrogen to a certain high-pressure state and discharges it to the outside.

The pressure boosting pump 32 has a crank mechanism 34, a crosshead 35, a piston rod 36, a piston 37, and a cylinder block 38.

The crank mechanism 34 converts the rotational power transmitted from the reducer 33 into linear reciprocating power and transmits it to the crosshead 35. The crosshead 35 reciprocates in a vertical direction VD by the reciprocating power in the vertical direction VD transmitted from the crank mechanism 34. The piston rod 36 is coupled to the crosshead 35 at its upper end, and the piston 37 is coupled to its other end. The cylinder block 38 has a hollow shape, and the piston 37 is movably supported along the vertical direction VD thereinside.

The lower part of the pressure boosting pump 32, that is, the cylinder block 38 is disposed inside a vessel 39. The vessel 39 is an adiabatic vacuum vessel, and its inside is maintained at a vacuum state together with the pressure boosting pump 32. The vessel 39 is supplied with liquid hydrogen thereinside and filled to an atmospheric-pressure state.

When the pressure boosting pump 32 is operated, first, at a suction step, at which the piston 37 ascends, the liquid hydrogen from the vessel 39 is sucked into the cylinder block 38. Next, at a compression step, at which the piston 37 descends, the liquid hydrogen inside the cylinder block 38 is compressed, and high-pressure liquid hydrogen is discharged to the outside of the vessel 39.

### <Configuration of the Pressure Boosting Pump>

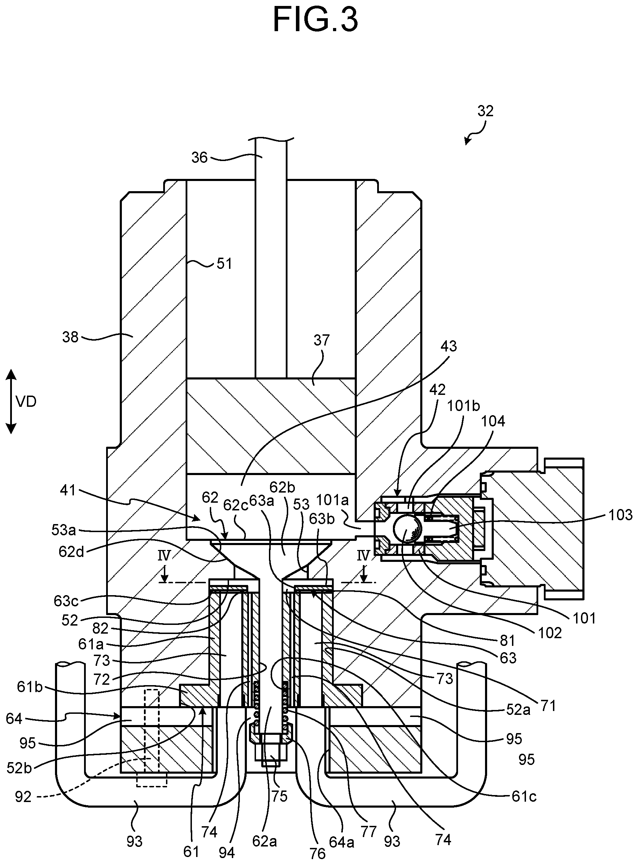

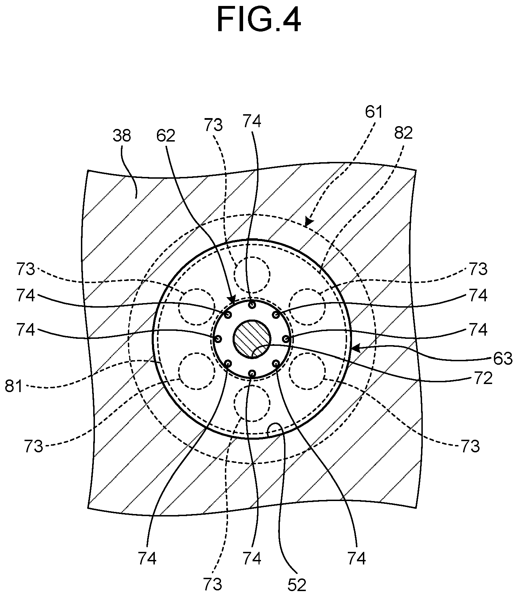

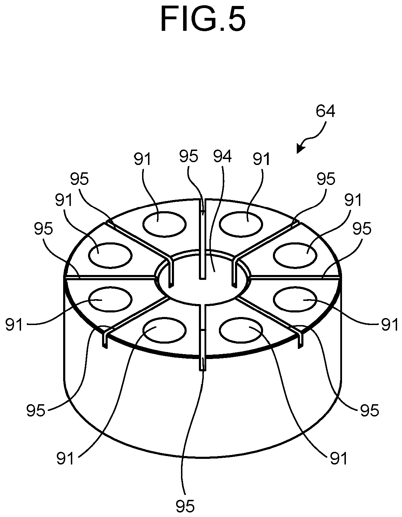

FIG. 3 is a vertical sectional view of the main part of the pressure boosting pump including a suction valve of the first embodiment, FIG. 4 is a IV-IV sectional view of FIG. 3 representing the suction valve, and FIG. 5 is a perspective view of a casing pressing member.

As illustrated in FIG. 3, the pressure boosting pump 32 includes a suction valve 41 and a discharge valve 42. The suction valve 41, when it opens, sucks liquid hydrogen into a compression chamber 43. The discharge valve 42, when it opens, discharges high-pressure liquid hydrogen compressed in the compression chamber 43 to the outside.

The cylinder block 38 is disposed along the vertical direction VD. The cylinder block 38 is formed with a fitting hole 51 opening upward in its upper part and is formed with a recess 52 opening downward in its lower part. The fitting hole 51 and the recess 52 have a cylindrical shape and are caused to communicate with each other via a communicating hole 53, which also has a cylindrical shape. The piston 37 fits into the fitting hole 51 of the cylinder block 38 from above and is movably supported along the vertical direction VD. By the piston 37 fitting into the fitting hole 51 of the cylinder block 38, the compression chamber 43 sectioned by the piston 37 and the fitting hole 51 is formed. The fitting hole 51, the recess 52, the communicating hole 53, the piston 37, and the compression chamber 43 are disposed concentrically.

As illustrated in FIG. 3 and FIG. 4, the suction valve 41 is disposed in the recess 52 of the cylinder block 38. The suction valve 41 has a valve casing 61, a first valve body 62, a second valve body 63, and a pressing member 64.

The valve casing 61 has a convex cylindrical shape. The valve casing 61 has a small-diameter main body 61a and a flange part 61b larger in diameter than the main body 61a. The valve casing 61 is formed by the flange part 61b integrally provided in the lower part of the main body 61a. The recess 52 has a small-diameter hole 52a and a large-diameter hole 52b larger in diameter than the small-diameter hole 52a. The recess 52 is formed by the large-diameter hole 52b integrally provided in the lower part of the small-diameter hole 52a. In the valve casing 61, the main body 61a fits into the small-diameter hole 52a of the recess 52, and the flange part 61b fits into the large-diameter hole 52b of the recess 52. In this case, in the valve casing 61, the lower face of the flange part 61b is continuous with the lower face of the cylinder block 38 without any step. In the valve casing 61, the length of the main body 61a is shorter than the length of the small-diameter hole 52a, and thus the distal end face of the main body 61a and the bottom face of the small-diameter hole 52a face each other with a gap. Thus, a first space part 71 is sectioned between the recess 52 of the cylinder block 38 and the valve casing 61.

The valve casing 61 is provided with a through hole 72 along the vertical direction VD in its central part. The valve casing 61 is provided with a plurality of (six in the present embodiment) suction holes (suction channels) 73 along the vertical direction VD closer to its outer periphery in a radial direction, spaced apart from each other in a circumferential direction. In addition, the valve casing 61 is provided with a plurality of (eight in this embodiment) first discharge holes (first discharge channels) 74 along the vertical direction VD closer to the through hole 72 in the radial direction, spaced apart from each other in the circumferential direction. The suction holes 73 suck liquid hydrogen from the outside into the first space part 71. The first discharge holes 74 discharge liquid hydrogen or hydrogen gas staying in the first space part 71 to the outside. The outside is a portion that is outside the cylinder block 38, is inside the vessel 39 (refer to FIG. 2), and is filled with liquid hydrogen at a low-pressure state of about atmospheric pressure to 1 MPaG.

The first valve body 62 has a rod part 62a and a head part 62b. In the first valve body 62, the head part 62b is provided integrally with the upper end of the rod part 62a. The rod part 62a is disposed inside the valve casing 61 along the vertical direction VD. That is, in the first valve body 62, the rod part 62a fits into the through hole 72 of the valve casing 61 and is movably supported along an axial direction (the vertical direction VD). The head part 62b has a substantially conical trapezoidal shape expanding its diameter upward. In the first valve body 62, the flat top face of the head part 62b is a pressure receiving face 62c and the curved lower face of the head part 62b is a seat face 62d. In the first valve body 62, the pressure receiving face 62c faces the compression chamber 43.

In the cylinder block 38, the upper part of the communicating hole 53 expands its diameter upward to form a shape similar to that of the head part 62b and is provided with a valve seat 53a. In the first valve body 62, the head part 62b is disposed in the upper part of the communicating hole 53, and the seat face 62d can seat on the valve seat 53a. When the first valve body 62 moves downward and the seat face 62d of the head part 62b seats on the valve seat 53a, the first valve body 62 closes the communicating hole 53 to isolate the compression chamber 43 and the first space part 71 from each other. On the other hand, when the first valve body 62 moves upward and the seat face 62d of the head part 62b separates from the valve seat 53a, the first valve body 62 opens the communicating hole 53 to cause the compression chamber 43 and the first space part 71 to communicate with each other.

In the first valve body 62, the lower end of the rod part 62a protrudes below the valve casing 61. In the rod part 62a, a spring receiving member 76 is fixed to its lower end by a nut 75. A compression coil spring 77 as a biasing member is disposed between a spring receiving part 61c formed in the valve casing 61 and the spring receiving member 76 of the first valve body 62. The compression coil spring 77 biases the first valve body 62 downward against the valve casing 61. That is, the first valve body 62 is biased in the direction in which the seat face 62d of the head part 62b seats on the valve seat 53a of the communicating hole 53 by the biasing force of the compression coil spring 77 and is supported in a biased manner at a position to close the communicating hole 53 and to isolate the compression chamber 43 and the first space part 71 from each other.

The second valve body 63 is a disk-shaped plate member and is provided with an opening part 63a in its central part. The second valve body 63 has an outer diameter approximately the same as the outer diameter of the valve casing 61 and an inner diameter larger than the diameter at the position at which the first discharge holes 74 are formed. The second valve body 63 is disposed in the first space part 71 sectioned between the recess 52 of the cylinder block 38 and the valve casing 61. The second valve body 63 is movably supported on the cylinder block 38 and the valve casing 61 along the vertical direction VD in the first space part 71. Sealing members 81 and 82 formed in a ring shape are provided between the second valve body 63 and the main body 61a of the valve casing 61. The sealing member 81 is disposed closer to the outer periphery of the main body 61a, and the sealing member 82 is disposed closer to the inner periphery of the main body 61a. That is, the sealing members 81 and 82 are disposed on both sides of the main body 61a in the radial direction with the suction holes 73 interposed therebetween. In the second valve body 63, its upper face is a pressure receiving face 63b and its lower face is a seat face 63c in contact with the sealing members 81 and 82. In the second valve body 63, the pressure receiving face 63b faces the communicating hole 53. In the second valve body 63, when the seat face 63c seats on the sealing members 81 and 82, the first space part 71 and the suction holes 73 are isolated from each other. On the other hand, in the second valve body 63, when the seat face 63c separates from the sealing members 81 and 82, the first space part 71 and the suction holes 73 communicate with each other.

As illustrated in FIG. 3 and FIG. 5, the pressing member 64 has a cylindrical shape. The pressing member 64 presses the valve casing 61 against the cylinder block 38. That is, the pressing member 64 is provided with a plurality of (eight in the present embodiment) mounting holes 91 along the vertical direction VD, spaced apart from each other in the circumferential direction. In the pressing member 64, its upper face is in contact with the lower face of the cylinder block 38 and the lower face of the flange part 61b of the valve casing 61. In this state, a plurality of fastening bolts 92 are inserted from below into the respective mounting holes 91 of the pressing member 64, and their tips are threadedly engaged with screw holes of the cylinder block 38. By the pressing member 64 being fastened to the cylinder block 38, the valve casing 61 is pressed against the pressing member 64 while being disposed in the recess 52 and is supported on the cylinder block 38.

The pressing member 64 has an outer diameter approximately the same as the outer diameter of the cylinder block 38 and an inner diameter larger than the diameter of the position at which the suction holes 73 are formed. Thus, lower end openings of the suction holes 73 and lower end openings of the first discharge holes 74 are exposed inside the pressing member 64. A plurality of suction tubes 93 are supported on the pressing member 64 via support members not shown. In the suction tubes 93, one ends are coupled to the lower end openings of the suction holes 73, and the other ends are extended upward and open to the outside, that is, the inside of the vessel 39 (refer to FIG. 2).

Since the pressing member 64 has a cylindrical shape, a second space part 94 is provided inside an inner peripheral face 64a. The second space part 94 communicates with the first discharge holes 74 above. The second space part 94 communicates with the inside of the vessel 39 (refer to FIG. 2), that is, the space filled with liquid hydrogen. Thus, the liquid hydrogen or hydrogen gas in the first space part 71 is discharged into the liquid hydrogen in the second space part 94 through the first discharge holes 74.

However, the hydrogen gas discharged from the first space part 71 to the second space part 94 through the first discharge holes 74 is gas, is thus less likely to be diffused into the liquid hydrogen, and is likely to stay in the second space part 94. Thus, the pressing member 64 is provided with second discharge holes (second discharge channels) 95 discharging the hydrogen gas discharged from the first space part 71 to the second space part 94 through the first discharge holes 74 outside the pressing member 64 in the radial direction.

The first discharge holes 74 are disposed along the vertical direction VD, and the second discharge holes 95 are disposed along the horizontal direction. One ends of the second discharge holes 95 communicate with the first discharge holes 74 via the second space part 94, and the other ends thereof open to the inside of the vessel 39 (refer to FIG. 2), which is the outside. A plurality of (eight in the present embodiment) the second discharge holes 95 are provided along the radial direction of the pressing member 64 and spaced apart from each other in the circumferential direction of the pressing member 64. The second discharge holes 95 have a slit shape opening upward in the vertical direction VD in the pressing member 64. The lower faces of the second discharge holes 95 having a slit shape are along the horizontal direction.

As illustrated in FIG. 3, the discharge valve 42 is a check valve and is disposed on the side of the cylinder block 38. The discharge valve 42 has a valve casing 101, a ball 102, a support 103, and a compression coil spring 104.

The valve casing 101 has a hollow shape and has an inflow hole 101a and a discharge hole 101b. The inflow hole 101a communicates with the compression chamber 43, and the discharge hole 101b communicates with a discharge channel for hydrogen gas (not shown). The ball 102 can open and close the discharge hole 101b. The support 103 supports the ball 102 and transmits the biasing force of the compression coil spring 104 to the ball 102.

The discharge valve 42 is opened when the pressure of the liquid hydrogen in the compression chamber 43 becomes a preset high pressure or higher. That is, when the pressure of the liquid hydrogen in the compression chamber 43 is less than the high pressure, the ball 102 closes the discharge hole 101b by the biasing force of the compression coil spring 104. On the other hand, when the pressure of the liquid hydrogen in the compression chamber 43 becomes the high pressure or higher, the pressure of the liquid hydrogen becomes higher than the biasing force of the compression coil spring 104, and the ball 102 operates to open the discharge hole 101b.

### <Modification of Suction Valve>

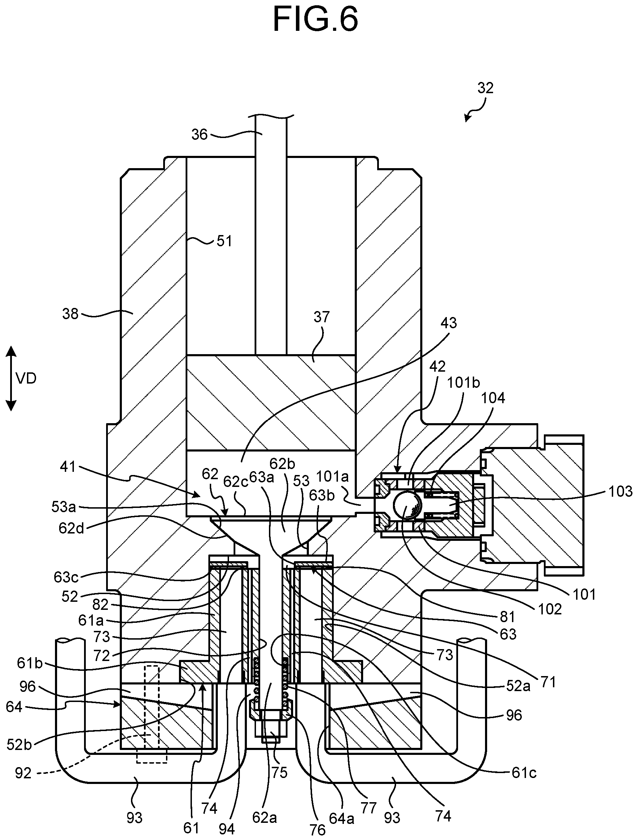

The configuration of the second discharge holes 95 of the suction valve 41 is not limited to that described above. FIG. 6 is a vertical sectional view of the main part of the pressure boosting pump including the suction valve of a modification of the first embodiment.

As illustrated in FIG. 6, the pressing member 64 is provided with second discharge holes 96 discharging the hydrogen gas discharged from the first space part 71 to the second space part 94 through the first discharge holes 74 outside the pressing member 64 in the radial direction.

The second discharge holes 96 are disposed along the horizontal direction. One ends of the second discharge holes 96 communicate with the first discharge holes 74 via the second space part 94, and the other ends thereof open to the inside of the vessel 39 (refer to FIG. 2), which is the outside. A plurality of the second discharge holes 96 are provided along the radial direction of the pressing member 64 and spaced apart from each other in the circumferential direction of the pressing member 64. The second discharge holes 96 have a slit shape opening upward in the vertical direction VD in the pressing member 64. In this case, in the second discharge holes 96 having a slit shape, an end of the pressing member 64 closer to an outer periphery is positioned above an end of the pressing member 64 closer to an inner periphery, in the vertical direction VD of the pressing member 64. That is, in the second discharge holes 96 having a slit shape, their lower faces are inclined, for example, in a range of 5 degrees to 30 degrees with respect to the horizontal direction upward as the distance from the center of the pressing member 64 increases outward.

### <Operation of Suction Valve and Discharge Valve>

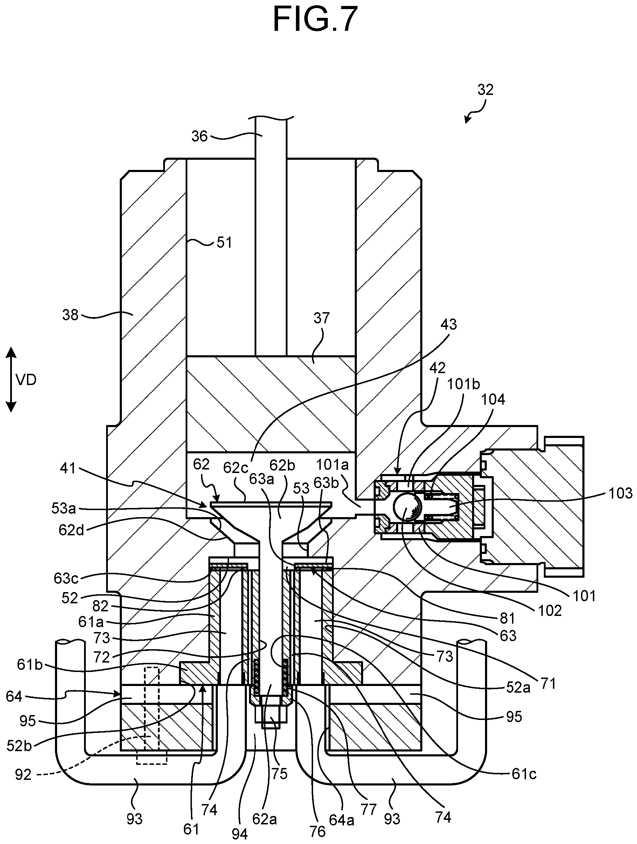

FIG. 7 is a vertical sectional view of an operating state of the pressure boosting pump.

As illustrated in FIG. 7, first, at the suction step of the pressure boosting pump 32, when the piston 37 moves (ascends) from the bottom dead center to the top dead center via the piston rod 36, the volume of the compression chamber 43 expands, and thereby the pressure in the compression chamber 43 becomes negative. In this process, the first valve body 62 moves upward due to its ascending force (suction force) overcoming the biasing force of the compression coil spring 77, and the seat face 62d of the head part 62b separates from the valve seat 53a. The first valve body 62 then opens the communicating hole 53, causing the compression chamber 43 and the first space part 71 to communicate with each other. When the negative pressure in the compression chamber 43 acts on the second valve body 63 through the communicating hole 53, the second valve body 63 moves upward due to the negative pressure, and the seat face 63c separates from the sealing members 81 and 82. The second valve body 63 then causes the first space part 71 and the suction holes 73 to communicate with each other. Thus, the suction valve 41 sucks external liquid hydrogen from the respective suction tubes 93 into the first space part 71 through the respective suction holes 73 and further sucks it into the compression chamber 43 through the communicating hole 53.

Next, at the compression step of the pressure boosting pump 32, when the piston 37 moves (descends) to the upper dead center or the lower dead center via the piston rod 36, the volume of the compression chamber 43 is reduced, and thereby the pressure in the compression chamber 43 becomes positive pressure. In this process, the first valve body 62 moves downward by the biasing force of the compression coil spring 77 because the suction force decreases, and the seat face 62d of the head part 62b seats on the valve seat 53a. The first valve body 62 then closes the communicating hole 53, isolating the compression chamber 43 and the first space part 71 from each other. When the positive pressure in the compression chamber 43 acts on the second valve body 63 through the communicating hole 53, the second valve body 63 moves downward because the suction force decreases, and the seat face 63c seats on the sealing members 81 and 82. The second valve body 63 then isolates the first space part 71 and the suction holes 73 from each other.

When the piston 37 further descends, the pressure in the compression chamber 43 becomes higher pressure because the volume of the compression chamber 43 is further reduced. In this process, when the pressure of the liquid hydrogen in the compression chamber 43 becomes a certain high pressure or higher, the pressure of the liquid hydrogen becomes higher than the biasing force of the compression coil spring 104, and the ball 102 operates to open the discharge hole 101b. Thus, the discharge valve 42 discharges the high-pressure liquid hydrogen in the compression chamber 43 to the outside of the cylinder block 38 through the inflow hole 101a and the discharge hole 101b.

At the compression step of the pressure boosting pump 32, while the first valve body 62 descends and the seat face 62d of the head part 62b seats on the valve seat 53a to close the communicating hole 53, part of the high-pressure liquid hydrogen in the compression chamber 43 leaks through the communicating hole 53 to the first space part 71. The high-pressure liquid hydrogen having leaked to the first space part 71 is discharged into the liquid hydrogen in the second space part 94, which is at an atmospheric-pressure state, through the first discharge holes 74. However, the high-pressure liquid hydrogen having leaked to the first space part 71 is partly gasified gas (hydrogen gas), which is less likely to be diffused downward and may stay in the second space part 94. However, the second space part 94 communicates with the outside through the second discharge holes 95, and the hydrogen gas staying in the second space part 94 flows horizontally through the second discharge holes 95 and is discharged to the outside of the pressing member 64 closer to its outer periphery. In this process, if the second discharge holes 96 are inclined upward outward as illustrated in FIG. 6, the hydrogen gas, which has been gasified from the liquid hydrogen staying in the second space part 94, flows diagonally upward through the second discharge holes 96 and is thereby efficiently discharged to the outside of the pressing member 64 closer to its periphery.

### [Second Embodiment]

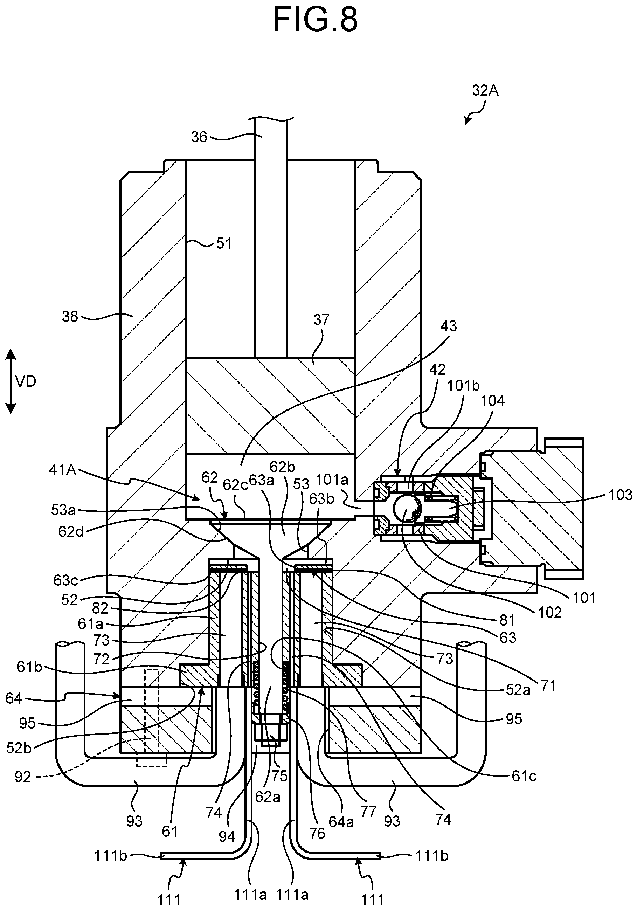

FIG. 8 is a vertical sectional view of the main part of a pressure boosting pump including a suction valve of a second embodiment. Components having the same functions as those of the first embodiment described above are denoted by the same symbols, and detailed descriptions thereof will be omitted.

As illustrated in FIG. 8, this pressure boosting pump 32A includes a suction valve 41A and the discharge valve 42. The discharge valve 42 is the same as in the first embodiment. The suction valve 41A has the valve casing 61, the first valve body 62, the second valve body 63, the pressing member 64, and discharge tubes (third discharge channels) 111. The valve casing 61, the first valve body 62, the second valve body 63, and the pressing member 64 are the same as in the first embodiment.

The valve casing 61 is disposed in the recess 52 of the cylinder block 38, thereby sectioning the first space part 71. The valve casing 61 is provided with a through hole 72 in its central part. The valve casing 61 is provided with a plurality of suction holes 73 closer to its outer periphery, spaced apart from each other in the circumferential direction. The valve casing 61 is provided with a plurality of first discharge holes 74 closer to the through hole 72, spaced apart from each other in the circumferential direction.

In the valve casing 61, the discharge tubes 111 discharging the hydrogen gas in the first discharge holes 74, below the pressing member 64, are coupled. The discharge tube 111 has a vertical part 111a and a horizontal part 111b. To a lower end of the vertical part 111a, one end of the horizontal part 111b is coupled to form an L shape. Lower end openings of the first discharge holes 74 are exposed inside the pressing member 64. A plurality of the discharge tubes 111 are supported on the pressing member 64 via support members not shown. In the discharge tubes 111, upper ends of the vertical parts 111a are coupled to the lower end openings of the first discharge holes 74. In the discharge tubes 111, the other ends of the horizontal parts 111b open to the inside of the vessel 39 (refer to FIG. 2). The other ends of the horizontal parts 111b may be bent upward to open to the inside of the vessel 39 (refer to FIG. 2).

Thus, at the compression step of the pressure boosting pump 32A, when the first valve body 62 descends to close the communicating hole 53, part of the high-pressure liquid hydrogen in the compression chamber 43 leaks through the communicating hole 53 to the first space part 71. The high-pressure liquid hydrogen containing hydrogen gas having leaked to the first space part 71 descends through the first discharge holes 74 and flows to the discharge tubes 111. The high-pressure liquid hydrogen having flowed to the discharge tubes 111 is discharged into the liquid hydrogen in the vessel 29, which is at an atmospheric-pressure state, through the vertical parts 111a and the horizontal parts 111b.

When the high-pressure liquid hydrogen having leaked to the first space part 71 is discharged from the first discharge holes 74 through the discharge tubes 111, the liquid hydrogen discharged from the discharge tubes 111 may return to the second space part 94 and stay there. When the high-pressure liquid hydrogen having leaked to the first space part 71 flows from the first discharge holes 74 to the discharge tubes 111, part of the liquid hydrogen may leak to the second space part 94. In this case, the high-pressure liquid hydrogen in the second space part 94 flows horizontally through the second discharge holes 95 and is discharged to the outer periphery of the pressing member 64. However, the second discharge holes 95 may be eliminated as needed.

### [Third Embodiment]

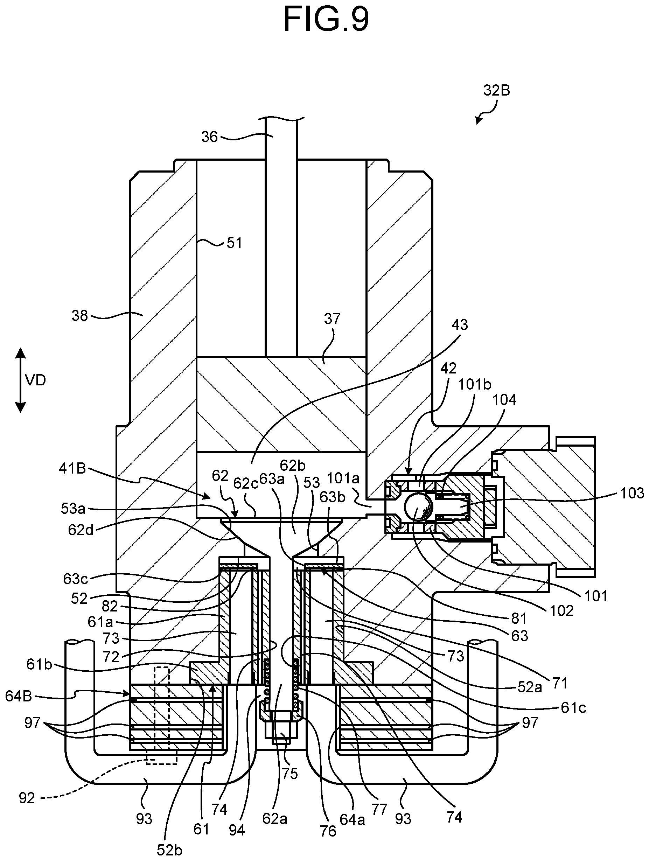

FIG. 9 is a vertical sectional view of the main part of a pressure boosting pump including a suction valve of a third embodiment. Components having the same functions as those of the first embodiment described above are denoted by the same symbols, and detailed descriptions thereof will be omitted.

As illustrated in FIG. 9, this pressure boosting pump 32B includes a suction valve 41B and the discharge valve 42. The discharge valve 42 is the same as in the first embodiment. The suction valve 41B has the valve casing 61, the first valve body 62, the second valve body 63, and a pressing member 64B. The valve casing 61, the first valve body 62, and the second valve body 63 are the same as in the first embodiment.

The pressing member 64B presses the valve casing 61 against the cylinder block 38. The pressing member 64B has a cylindrical shape, and thus the lower end openings of the suction holes 73 and the lower end openings of the first discharge holes 74 are exposed inside. To the suction holes 73, the suction tubes 93 are coupled.

The pressing member 64B is provided with the second space part 94 inside. The second space part 94 communicates with the first discharge holes 74 above. The second space part 94 communicates with the inside of the vessel 39 (refer to FIG. 2), that is, the space filled with liquid hydrogen. Thus, the hydrogen gas in the first space part 71 is discharged into the liquid hydrogen in the second space part 94 through the first discharge holes 74.

The pressing member 64B is provided with second discharge holes (second discharge channels) 97 discharging the hydrogen gas discharged from the first space part 71 to the second space part 94 through the first discharge holes 74 outside the pressing member 64B in the radial direction. The first discharge holes 74 are disposed along the vertical direction VD, and the second discharge holes 97 are disposed along the horizontal direction. One ends of the second discharge holes 97 communicate with the first discharge holes 74 via the second space part 94, and the other ends thereof open to the inside of the vessel 39 (refer to FIG. 2), which is the outside.

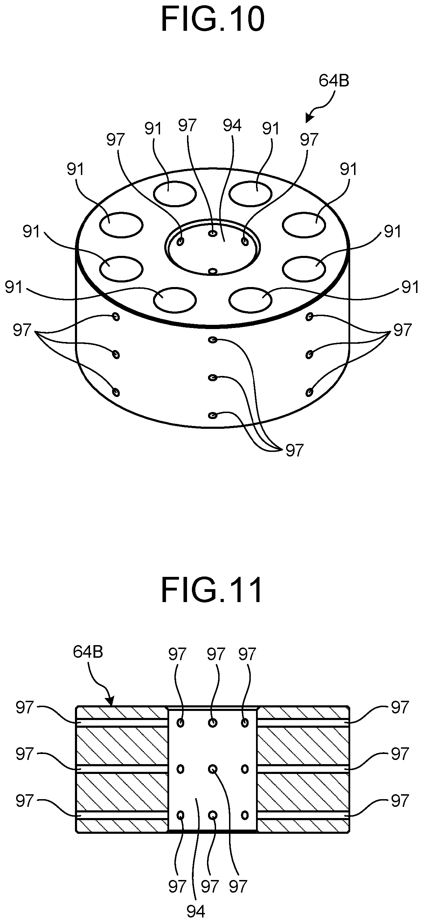

FIG. 10 is a perspective view of a casing pressing member, and FIG. 11 is a vertical sectional view of the casing pressing member.

As illustrated in FIG. 10 and FIG. 11, the second discharge holes 97 are provided along the radial direction of the pressing member 64B. A plurality of (eight in the present embodiment) the second discharge holes 97 are provided spaced apart from each other in the circumferential direction of the pressing member 64B. A plurality of (three in the present embodiment) the second discharge holes 97 are provided spaced apart from each other in an axial direction of the pressing member 64B (the vertical direction VD). The second discharge holes 97 are provided unequally spaced or equally spaced in the axial direction of the pressing member 64B (the vertical direction VD). The second discharge holes 97 have a hole shape passing through the pressing member 64B in the radial direction.

The second discharge holes 97 may be positioned such that, as in the modification of the first embodiment, an end of the pressing member 64B closer to an outer periphery is positioned above an end of the pressing member 64B closer to an inner periphery, in the vertical direction VD of the pressing member 64B. In other words, the second discharge holes 97 having a hole shape may be inclined, for example, in a range of 5 degrees to 30 degrees with respect to the horizontal direction upward as the distance from the center of the pressing member 64B increases outward.

Note that the operation of the pressure boosting pump 32B of the third embodiment is the same as the operation of the pressure boosting pump 32 of the first embodiment, and thus a description thereof is omitted.

### [Fourth Embodiment]

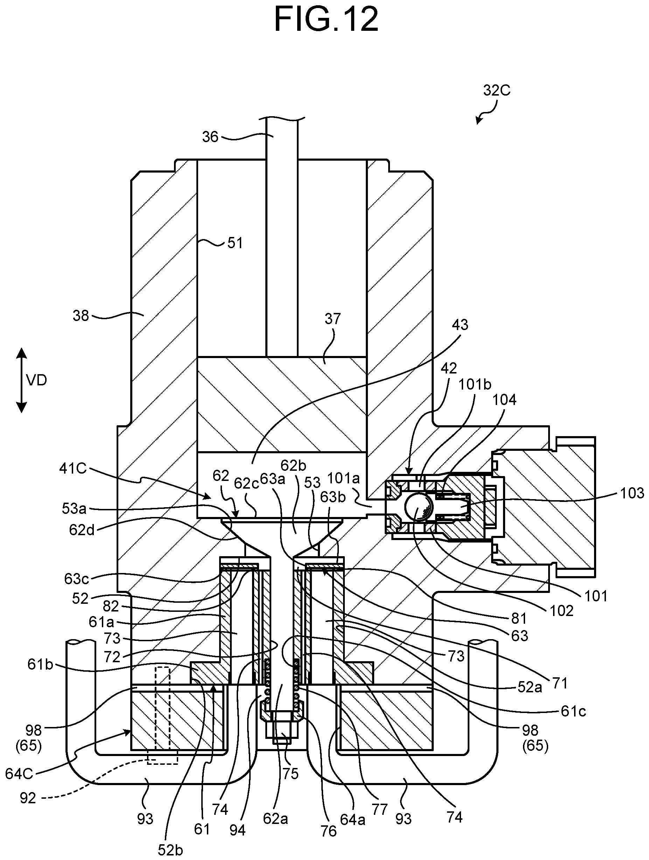

FIG. 12 is a vertical sectional view of the main part of a pressure boosting pump including a suction valve of a fourth embodiment. Components having the same functions as those of the first embodiment described above are denoted by the same symbols, and detailed descriptions thereof will be omitted.

As illustrated in FIG. 12, this pressure boosting pump 32C includes a suction valve 41C and the discharge valve 42. The discharge valve 42 is the same as in the first embodiment. The suction valve 41C has the valve casing 61, the first valve body 62, the second valve body 63, a pressing member 64C, and a spacer 65. The valve casing 61, the first valve body 62, and the second valve body 63 are the same as in the first embodiment.

The pressing member 64C presses the valve casing 61 against the cylinder block 38. The pressing member 64C has a cylindrical shape, and thus the lower end openings of the suction holes 73 and the lower end openings of the first discharge holes 74 are exposed inside. To the suction holes 73, the suction tubes 93 are coupled.

The pressing member 64C is provided with the second space part 94 inside. The second space part 94 communicates with the first discharge holes 74 above. The second space part 94 communicates with the inside of the vessel 39 (refer to FIG. 2), that is, the space filled with liquid hydrogen. Thus, the hydrogen gas in the first space part 71 is discharged into the liquid hydrogen in the second space part 94 through the first discharge holes 74.

The spacer 65 is disposed between the cylinder block 38 and valve casing 61 and the pressing member 64C. The spacer 65 is held between the cylinder block 38 and the pressing member 64C and is held between the valve casing 61 and the pressing member 64C. The spacer 65 provides second discharge holes (second discharge channels) 98 between the cylinder block 38 and the valve casing 61 and the pressing member 64C. The second discharge holes 98 discharge the hydrogen gas discharged from the first space part 71 to the second space part 94 through the first discharge holes 74 outside the pressing member 64C in the radial direction. The first discharge holes 74 are disposed along the vertical direction VD, and the second discharge holes 98 are disposed along the horizontal direction. One ends of the second discharge holes 98 communicate with the first discharge holes 74 via the second space part 94, and the other ends thereof open to the inside of the vessel 39 (refer to FIG. 2), which is the outside.

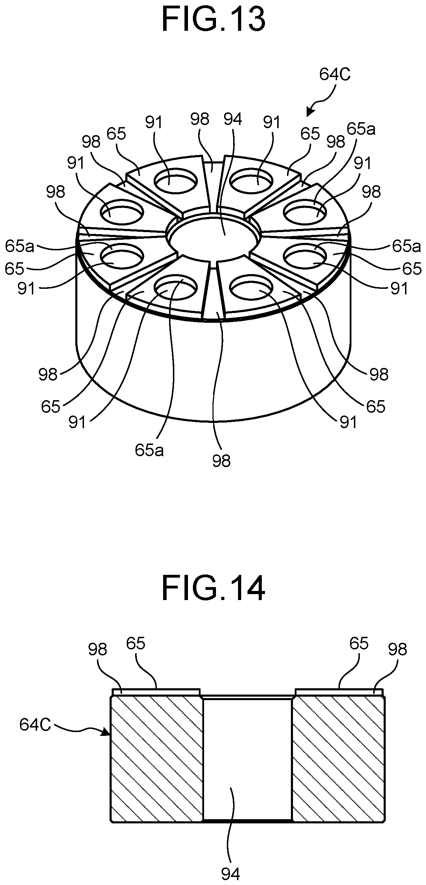

FIG. 13 is a perspective view of a casing pressing member, and FIG. 14 is a vertical sectional view of the casing pressing member.

As illustrated in FIG. 13 and FIG. 14, a plurality of (eight in the present embodiment) the spacers 65 are provided spaced apart from each other in the circumferential direction of the pressing member 65C. The spacer 65 has a plate shape having a certain thickness. The spacer 65 has a fan shape with the apex of the pressing member 65C closer to the center notched in an arc shape in a plan view. The spacer 65 has a through hole 65a through which the fastening bolt 92 (refer to FIG. 12) passes. The spacers 65 are disposed on an upper face of the pressing member 65C along the circumferential direction to form a substantially ring shape in a plan view. Adjacent spacers 65 are disposed spaced apart from each other, thus forming the second discharge holes 98 between the adjacent spacers 65.

The second discharge holes 98 are formed along the radial direction of the pressing member 64C. A plurality of (eight in the present embodiment) the second discharge holes 98 are provided spaced apart from each other in the circumferential direction of the pressing member 64C. The second discharge holes 98 have a hole shape along the radial direction sectioned by the spacers 65 between the cylinder block 38 and the valve casing 61 and the pressing member 64C.

Note that the spacers 65 are disposed independently of each other, but this configuration is not limiting. For example, taking the assemblability of the suction valve 41C into consideration, the spacers 65 may be coupled to each other in a ring shape via coupling parts thinner than the spacers 65.

Note that the operation of the pressure boosting pump 32C of the fourth embodiment is the same as the operation of the pressure boosting pump 32 of the first embodiment, and thus a description thereof is omitted.

### [Effects of the Present Embodiment]

A suction valve according to a first aspect includes the cylinder block 38 having the compression chamber 43 and the recess 52 communicating with the compression chamber 43, the valve casing 61 housed in the recess 52 and forming the first space part 71 communicating with the compression chamber 43, the pressing member 64, 64B, or 64C pressing the valve casing 61 against the cylinder block 38, the suction holes (the suction channels) 73 provided in the valve casing 61 and sucking liquid hydrogen (a low-temperature fluid) to the first space part 71, the first discharge holes (the first discharge channels) 74 provided in the valve casing 61 and discharging hydrogen gas in the first space part 71, the first valve body 62 capable of causing the compression chamber 43 and the first space part 71 to communicate with each other and capable of isolating the compression chamber 43 and the first space part 71 from each other, the second valve body 63 capable of causing the first space part 71 and the first discharge holes 74 to communicate with each other and capable of isolating the first space part 71 and the first discharge holes 74 from each other, and the second discharge holes (the second discharge channels) 95, 96, 97, or 98 discharging hydrogen gas in the first discharge holes 74 outside the pressing member 64, 64B, or 64C.

With the suction valve according to the first aspect, when high-pressure liquid hydrogen compressed in the compression chamber 43 is discharged outside, part of the high-pressure liquid hydrogen in the compression chamber 43 leaks to the first space part 71, and the high-pressure liquid hydrogen having leaked to the first space part 71 is discharged outside the pressing member 64, 64B, or 64C through the first discharge holes 74 and the second discharge holes 95. The high-pressure liquid hydrogen contains vaporized hydrogen gas and is less likely to flow downward but easily flows in the horizontal direction through the second discharge holes 95, and the backflow of the hydrogen gas can be prevented to properly discharge the gasified liquid hydrogen.

A suction valve according to a second aspect is the suction valve according to the first aspect, in which the first discharge holes 74 are disposed along the vertical direction VD, and the second discharge holes 95, 96, 97, or 98 are disposed along the horizontal direction, one ends of which communicate with the first discharge holes 74 and the other ends of which open outside. This configuration allows the vaporized hydrogen gas to flow in the horizontal direction through the second discharge holes 95, and the gasified liquid hydrogen can properly be discharged outside.

A suction valve according to a third aspect is the suction valve according to the second aspect, in which the pressing member 64, 64B, or 65C has a tubular shape with the second space part 94 formed inside, and one ends of the second discharge holes 95, 96, 97, or 98 communicate with the first discharge holes 74 through the second space part 94. With this configuration, the high-pressure liquid hydrogen having leaked to the first space part 71 flows from the first discharge holes 74 to the second space part 94 and is discharged from the second space part 94 outside the pressing member 64, 64B, or 64C through the second discharge holes 95. This can eliminate direct connection between the first discharge holes 74 and the second discharge holes 95 to simply the structure.

A suction valve according to a fourth aspect is the suction valve according to any one of the first aspect to the third aspect, in which the second discharge holes 95, 96, 97, or 98 are provided along the radial direction of the pressing member 64, 64B, or 65C and spaced apart from each other in the circumferential direction of the pressing member 64, 64B, or 65C. With this configuration, the hydrogen gas in the first discharge holes 74 can properly be discharged outside the pressing member 64, 64B, or 64C through the second discharge holes 95.

A suction valve according to a fifth aspect is the suction valve according to any one of the first aspect to the fourth aspect, in which the second discharge holes 95 or 96 have a slit shape opening upward in the vertical direction VD in the pressing member 64. This configuration enables the second discharge holes 95 or 96 to be easily formed in the pressing member 64, thus improving processability.

A suction valve according to a sixth aspect is the suction valve according to any one of the first aspect to the fourth aspect, in which the second discharge holes 97 have a hole shape passing through the pressing member 64B in the radial direction. This configuration enables the second discharge holes 97 to be properly formed while inhibiting a reduction in the strength of the pressing member 64B.

A suction valve according to a seventh aspect is the suction valve according to any one of the first aspect to the sixth aspect, in which in the second discharge holes 96, an end of the pressing member 64 closer to an outer periphery is positioned above an end of the pressing member 64, 64B, or 65C closer to an inner periphery, in the vertical direction VD of the pressing member 64. With this configuration, the hydrogen gas in the first discharge holes 74 flows diagonally upward through the second discharge holes 96, and thus the hydrogen gas can efficiently be discharged to the outside of the pressing member 64 closer to its outer periphery.

A suction valve according to an eighth aspect is the suction valve according to any one of the first aspect to the fourth aspect, in which the second discharge holes 98 are provided between the cylinder block 38 or the valve casing 61 and the pressing member 65C. This configuration eliminates the need to process the second discharge holes 98 in the pressing member 65C, can prevent a reduction in the strength of the pressing member 64B, and can reduce processing costs.

A suction valve according to a ninth aspect is the suction valve according to any one of the first aspect to the seventh aspect, further including the discharge tubes (the third discharge tubes) 111 discharging the gas in the first discharge holes 74, below the pressing member 64, 64B, or 65C. This configuration can properly discharge the gasified liquid hydrogen.

A pressure boosting pump according to a 10th aspect includes the suction valve 41, 41A, 41B, or 41C according to any one of the first aspect to the ninth aspect, the piston 37 compressing the liquid hydrogen sucked from the suction valve 41, 41A, 41B, or 41C to the compression chamber 43, and the discharge valve 42 discharging the liquid hydrogen compressed by the piston 37. With this configuration, the backflow of the hydrogen gas in the suction valve 41, 41A, 41B, or 41C can be prevented to properly discharge the gasified liquid hydrogen, and consequently, pump efficiency can be improved.

A hydrogen supply system according to an 11th aspect includes the compression device 21 having the pressure boosting pump 32, 32A, 32B, or 32C of the 10th aspect to compress liquid hydrogen as the low-temperature fluid, the evaporation device 22 vaporizing the liquid hydrogen compressed by the compression device 21, and the dispenser 23 supplying hydrogen gas vaporized by the evaporation device 22. This configuration improves the pump efficiency of the pressure boosting pump 32, 32A, 32B, or 32C and can thereby improve the efficiency of supplying the hydrogen gas.

### Reference Signs List

10 HYDROGEN SUPPLY SYSTEM
11 CONTAINER
12 VEHICLE
21 COMPRESSION DEVICE
22 EVAPORATION DEVICE
23 DISPENSER
31 DRIVE MOTOR
32, 32A, 32B, 32C PRESSURE BOOSTING PUMP
33 REDUCER
34 CRANK MECHANISM
35 CROSSHEAD
36 PISTON ROD
37 PISTON
38 CYLINDER BLOCK
39 VESSEL
41, 41A, 41B, 41C SUCTION VALVE
42 DISCHARGE VALVE
43 COMPRESSION CHAMBER
51 FITTING HOLE
52 RECESS
53 COMMUNICATING HOLE
61 VALVE CASING
62 FIRST VALVE BODY
63 SECOND VALVE BODY
64, 64B, 65C PRESSING MEMBER
65 SPACER
71 FIRST SPACE PART
72 THROUGH HOLE
73 SUCTION HOLE (SUCTION CHANNEL)
74 FIRST DISCHARGE HOLE (FIRST DISCHARGE CHANNEL)
75 NUT
76 SPRING RECEIVING MEMBER
77 COMPRESSION COIL SPRING
81, 82 SEALING MEMBER
91 MOUNTING HOLE
92 FASTENING BOLT
93 SUCTION TUBE
94 SECOND SPACE PART
95, 96, 97, 98 SECOND DISCHARGE HOLE (SECOND DISCHARGE CHANNEL)
101 VALVE CASING
102 BALL
103 SUPPORT
104 COMPRESSION COIL SPRING
111 DISCHARGE TUBE (THIRD DISCHARGE CHANNEL)

## Claims

1. A suction valve comprising:
a block that includes a compression chamber and a recess communicating with the compression chamber;
a valve casing that is housed in the recess and forms a first space part communicating with the compression chamber;
a pressing member that presses the valve casing against the block;
a suction channel that is provided in the valve casing and sucks a low-temperature fluid to the first space part;
a first discharge channel that is provided in the valve casing and discharges gas in the first space part;
a first valve body that is capable of causing the compression chamber and the first space part to communicate with each other and is capable of isolating the compression chamber and the first space part from each other;
a second valve body that is capable of causing the first space part and the first discharge channel to communicate with each other and is capable of isolating the first space part and the first discharge channel from each other; and
a second discharge channel that discharges gas in the first discharge channel outside the pressing member.

2. The suction valve according to claim 1, wherein
the first discharge channel is disposed along a vertical direction, and
the second discharge channel is disposed along a horizontal direction, one end of which communicates with the first discharge channel and another end of which opens outside.

3. The suction valve according to claim 2, wherein
the pressing member has a tubular shape with a second space part formed inside, and
one end of the second discharge channel communicates with the first discharge channel via the second space part.

4. The suction valve according to any one of claims 1 to 3, wherein a plurality of the second discharge channels are provided along a radial direction of the pressing member and spaced apart in a circumferential direction of the pressing member.

5. The suction valve according to claim 1, wherein the second discharge channel has a slit shape opening upward in a vertical direction in the pressing member.

6. The suction valve according to claim 1, wherein the second discharge channel has a hole shape passing through the pressing member in a radial direction.

7. The suction valve according to claim 5 or claim 6, wherein in the second discharge channel, an end of the pressing member closer to an outer periphery is positioned above an end of the pressing member closer to an inner periphery, in a vertical direction of the pressing member.

8. The suction valve according to claim 1, wherein the second discharge channel is provided between the block or the valve casing and the pressing member.

9. The suction valve according to claim 1, further comprising a third discharge channel that discharges gas in the first discharge channel below the pressing member.

10. A pressure boosting pump comprising:
the suction valve according to claim 1;
a piston that compresses the low-temperature fluid sucked from the suction valve to the compression chamber; and
a discharge valve that discharges the low-temperature fluid compressed by the piston.

11. A hydrogen supply system comprising:
a compression device that includes the pressure boosting pump according to claim 10 to compress liquid hydrogen as the low-temperature fluid;
an evaporation device that vaporizes the liquid hydrogen compressed by the compression device; and
a dispenser that supplies hydrogen gas vaporized by the evaporation device.
